Europäisches Patentamt

European Patent Office

Office européen des brevets

(11) Publication number: **0 322 252**
**A2**

# (12) EUROPEAN PATENT APPLICATION

(21) Application number: **88312298.8**

(22) Date of filing: **23.12.88**

(51) Int. Cl.⁴: **A 23 N 7/02**

(30) Priority: **23.12.87 FI 875704**

(43) Date of publication of application:
**28.06.89 Bulletin 89/26**

(84) Designated Contracting States:
**CH DE FR GB LI NL SE**

(71) Applicant: **Engelholm, Torbjörn**
**SF-64200 Närpes (FI)**

(72) Inventor: **Engelholm, Torbjörn**
**SF-64200 Närpes (FI)**

(74) Representative: **Leale, Robin George et al**
**FRANK B. DEHN & CO. Imperial House 15-19 Kingsway**
**London WC2B 6UZ (GB)**

(54) **Apparatus and method for peeling potatoes and the like.**

㊽ A method of and apparatus for peeling potatoes by bringing the potatoes (11) into contact with at least two rotating grinding rolls (3) subjecting the potatoes to a grinding effect removing the peel. In order to be able to effect the peeling under dry conditions, the peeling is carried out without introduction of water into the peeling area and the grinding rolls are cuased to rotate at a rate such that the ceentrifugal force throws away the peelings (14') from the surface of the grinding rolls. The peeling machine is proveded with a driving motor (7) which is able to rotate all the grinding rolls (31 at a rate of rotation sufficiently high for causing the peelings to be thrown away.

FIG. 2

**Description**

## APPARATUS AND METHOD FOR PEELING POTATOES AND THE LIKE

The present invention relates to a method of peeling potatoes and the like products, wherein the potatoes or the like are brought into contact with at least two rotating grinding means subjecting the potatoes or the like to a grinding effect removing the peel, the peeled potatoes or the like being recovered and the peelings being removed from the grinding means.

Even though the invention will be described in the following mainly with reference to the peeling of the potatoes, the invention is likewise applicable to the peeling of other root crops, such as carrots, or fruit such as apples.

It is previously known to peel potatoes mechanically by bringing them into contact with rotating grinding means which gradually grind off the peel while the potatoes roll on from the inlet towards an outlet for peeled potatoes. Various types of mechanical peeling devices have been developed for this purpose.

In one device, the grinding means comprise cylindrical rolls arranged in the form of a drum. Not only the grinding rolls but also the drum rotates during the peeling, so that the potatoes roll on effectively and all peel-covered surfaces will make contact with the grinding rolls at one stage or another. The rate of rotation of the grinding rolls varies between 150 and 200 revolutions/minute.

In another device, the grinding rolls are arranged so as to define therebetween a stationary trough. In order to ensure that the potatoes move on by rolling, the rotating rolls are provided with suitable elevations or the machine is provided with some kind of mixing means. In this case, too, a rate of rotation varying between 150 and 200 revolutions/minute is applied.

Still another device intended for peeling and shaping Paris potatoes comprises two cooperating grinding rolls provided with peripheral grooves, two adjacent grooves defining an opening for the passage of the shaped potato balls. Both grinding rolls rotate in the same direction while one of them rotates at a lower rate of 400 revolutions/minute and the other roll at a higher rate for creating an advantageous difference in the rates of rotation, as a result of which the potatoes bounce repeatedly up into the air and turn a new peel-covered surface into contact with the rolls.

The peelings removed from the potatoes are soft and moist and tend to adhere to the grinding rolls so that the grinding effect of the rolls is deteriorated and, in the worst case, the machine is clogged. In order to avoid this, it has previously been necessary to introduce flushing water so as to spray the peelings off the grinding rolls. However, the flushing water causes substantial drawbacks partly because the flushing water requires cleaning and nevertheless causes a risk of water pollution and partly because water-soaked peelings are less suitable for use as animal fodder.

According to the present invention there is provided a method of peeling potatoes and the like products, wherein potatoes or the like are brought into contact with at least two rotating grinding means subjecting the potatoes or the like to a peeling effect removing the peel, peeled potatoes or the like being recovered and peelings being removed from the grinding means, characterised in that the grinding means are rotated at a rate such that the centrifugal force throws away the peelings from the surface of the grinding means.

By means of this method the above mentioned drawbacks are avoided and the peeling of potatoes and the like may be carried out under waterfree conditions.

The invention is based on the idea that the centrifugal force caused by the grinding means rotating at a sufficiently high rate is utilized for removing the peelings from the grinding means. In this way, the grinding means can be kept clean without the introduction of flushing water and the peelings can be recovered with a consistency as high as possible, so that it can be used as animal fodder.

According to the present invention there is further provided apparatus for peeling potatoes and the like, comprising
- a body
- at least two grinding rolls supported rotatably by the body and positioned substantially in parallel with and adjacent to each other for peeling the potatoes or the like, and
- a driving device for rotating the grinding rolls,
- an inlet for potatoes or the like to be peeled being provided at one end of the grinding rolls and an outlet for peeled potatoes or the like at the opposite end thereof,
characterised in that the grinding rolls are arranged to rotate with a number of revolutions such that the peelings are thrown away from the surface of the grinding rolls by the centrifugal force

As compared with peeling machines known from the prior art, the above apparatus requires only that the driving machinery for rotating the grinding rolls is such that the machinery is able to impart the required high rate of rotation to all the rolls. On the other hand, the machine is simpler because the means for introducing and recovering flushing water are omitted. The machine is also smaller because the higher rate of rotation of the rolls improves the peeling effect so that the grinding rolls can be correspondingly shorter.

An embodiment of the invention will now be described by way of example and with reference to the accompanying drawings, in which:

Figure 1 is a side view of a peeling machine according to an embodiment of the invention; and

Figure 2 is a sectional view of the peeling machine along the line II-II shown in Figure 1.

The principal parts of the peeling machine shown in the figures are known from the prior art. A horizontal drum 2 is mounted rotatably in a body 1. The cylindrical wall of the drum is formed by a number of grinding rolls 3 mounted rotatably between the drum ends. The grinding rolls are parallel with each other and positioned in such a way that a narrow gap 4 is defined between each pair of adjacent rolls. A feeding screw 5 secured to the drum is provided within the drum. The drum is connected so as to be driven by a motor 6 for rotating the drum about the longitudinal axis thereof. The grinding rolls are connected to a common motor 7 for rotating all the rolls around the longitudinal axes thereof.

The grinding roll drum is enclosed in a housing 8 having a bottom formed by a conveyor belt 9. At one end of the drum there is provided an inlet 10 for potatoes 11 to be peeled while the opposite drum end comprises an outlet 12 for peeled potatoes 13. Peelings from the potatoes are indicated with the reference numeral 14.

When the drum rotates and the potatoes are introduced into the machine, the potatoes are caused to roll in the drum partly by the effect of the rotation of the drum and the grinding rolls and partly by the displacement of the potatoes by the feeding screw towards the outlet. In this way all surface portions of the potatoes are brought into contact with the grinding rolls, which results in the peel being completely ground off the potatoes when they reach the outlet.

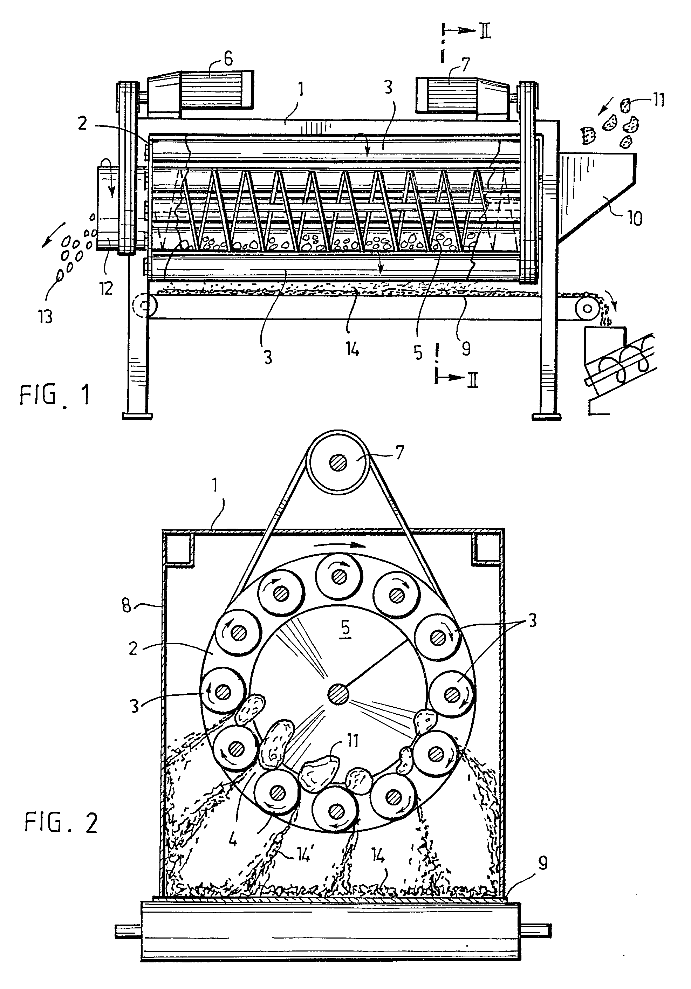

In one embodiment of such a peeling machine the grinding rolls have a diameter of 150 mm and the rolls rotate at a rate of rotation of 1,300 to 1,500 revolutions/minute. The peelings ground off the rolls are thrown away from the rolls by the centrifugal force caused by the high rate of rotation of the rolls, as shown in Figure 2 by beams 14'. In this way the grinding rolls are kept clean without the introduction of flushing water. The peelings recovered by means of the conveyor belt 9 thereby have a high consistency.

The rate of rotation of the grinding rolls required in each case for the peelings to be thrown away from the surface of the rolls depends to some extent on the type of root crops to be peeled, because some products have dry peel which is easier to loosen from the grinding roll while others may form peelings which are more difficult to loosen. Experiments carried out have shown that excellent results are obtained even with smaller rolls having a diameter as small as 100 mm and a rate of rotation as low as 1,000 revolutions/minute.

The drawing and the description related thereto are only intended to illustrate the idea of the invention. In their details, the method and the peeling machine may vary with the scope of the claims. The invention can thus also be applied to machines designed for peeling and shaping Paris potatoes according to Finnish Patent Specification 67 657.

## Claims

1. A method of peeling potatoes and the like products, wherein potatoes or the like (11) are brought into contact with at least two rotating grinding means (3) subjecting the potatoes or the like to a peeling effect romoving the peel, peeled potatoes or the like (13) being recovered and peelings (14) being removed from the grinding means, characterized in that the grinding means (3) are rotated at a rate such that the centrifugal force throws away the peelings (14') from the surface of the grinding means.

2. A method according to claim 1, characterized in that the grinding means (3) are rotated at a rate of at least 1,000 revolutions/minute, the grinding means being a roll having a diameter of 100 to 150 mm.

3. A method according to claim 2 characterised in that the grinding means (3) are rotated at a rate of at least 1,300 revolutions/minute.

4. Apparatus for peeling potatoes and the like, comprising
- a body (1)
- at least two grinding rolls (3) supported rotatably by the body and positioned substantially in parallel with and adjacent to each other for peeling the potatoes or the like, and
- a driving device (7) for rotating the grinding rolls,
- an inlet (10) for potatoes or the like (11) to be peeled being provided at one end of the grinding rolls and an outlet (12) for peeled potatoes or the like (13) at the opposite end thereof, characterized in that the grinding rolls (3) are arranged to rotate with a number of revolutions such that the peelings (14') are thrown away from the surface of the grinding rolls by the centrifugal force.

5. Apparatus according to claim 4, characterized in that the grinding rolls (3) rotate at a rate of at least 1,000 revolutions/minute, and that the diameter of the grinding roll is between 100 and 150 mm.

6. Apparatus according to claim 5 characterized in that the grinding rolls rotate at a rate of at least 1,300 revolutions/minute.

7. Apparatus according to claim 4, 5 or 6 characterized in that the grinding rolls (3) rotate at the same rate and in the same direction of rotation.

FIG. 1

FIG. 2